(19) Europäisches Patentamt
European Patent Office
Office européen des brevets

(11) **EP 2 162 204 B1**

(12) **EUROPÄISCHE PATENTSCHRIFT**

(45) Veröffentlichungstag und Bekanntmachung des Hinweises auf die Patenterteilung:
**11.05.2011  Patentblatt 2011/19**

(21) Anmeldenummer: **08760704.0**

(22) Anmeldetag: **09.06.2008**

(51) Int Cl.:
*B01D 53/94* (2006.01)      *F01N 3/035* (2006.01)

(86) Internationale Anmeldenummer:
**PCT/EP2008/057135**

(87) Internationale Veröffentlichungsnummer:
**WO 2008/155246 (24.12.2008 Gazette 2008/52)**

(54) **FILTERELEMENT UND FILTEREINRICHTUNG ZUR ABGASNACHBEHANDLUNG EINER BRENNKRAFTMASCHINE**

FILTER ELEMENT AND FILTER DEVICE FOR THE EXHAUST GAS AFTER-TREATMENT OF AN INTERNAL COMBUSTION ENGINE

ÉLÉMENT FILTRANT ET DISPOSITIF DE FILTRATION POUR LE POST-TRAITEMENT DE GAZ D'ÉCHAPPEMENT D'UN MOTEUR À COMBUSTION INTERNE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.06.2007  DE 102007028484**

(43) Veröffentlichungstag der Anmeldung:
**17.03.2010  Patentblatt 2010/11**

(73) Patentinhaber: **Robert Bosch GmbH**
**70442 Stuttgart (DE)**

(72) Erfinder:
• **REINSCH, Bernd**
  **71642 Ludwigsburg (DE)**
• **SAFFE, Christoph**
  **71263 Weil Der Stadt (DE)**

(56) Entgegenhaltungen:
**EP-A- 0 885 860     JP-A- 2 049 913**

## Beschreibung

Stand der Technik

Die Erfindung betrifft ein Filterelement zur Reinigung der Abgase einer Brennkraftmaschine nach dem Oberbegriff der nebengeordneten Ansprüche 1 und 2 sowie einen Filter mit einem Filterelement nach dem nebengeordneten Anspruch 17. Derartige Filterelemente werden beispielsweise als Rußfilter für Dieselbrennkraftmaschinen eingesetzt.

Die Filterelemente bestehen häufig aus einem keramischen Werkstoff und weisen eine Vielzahl von parallel zueinander verlaufenden Eintrittskanälen und Austrittskanälen auf.

Hergestellt werden Filterelemente aus keramischen Werkstoffen durch Extrudieren. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des Filters strömt, wird ein Teil der Kanäle am hinteren Ende des Filterelements verschlossen, während ein anderer Teil der Kanäle am vorderen Ende des Filterelements verschlossen werden. Dadurch werden zwei Gruppen von Kanälen gebildet, nämlich die sogenannten Eintrittskanäle, welche am Ende verschlossen sind und die sogenannten Austrittskanäle, welche am Anfang des Filterelements verschlossen sind.

Zwischen den Eintrittskanälen und den Austrittskanälen besteht nur über die porösen Wände des Filterelements (nachfolgend Filterwände) eine Strömungsverbindung, so dass das Abgas das Filterelement nur durchströmen kann, indem es aus den Eintrittskanälen durch die Wände des Filterelements hindurch in die Austrittskanäle strömt.

Diese Filterelemente werden mit einer katalytisch aktiven Beschichtung funktionalisiert. Solche Filterelemente besitzen in der Regel einen Filtrationswirkungsgrad von mehr als 80 %, häufig auch größer als 90 %. Neben einer möglichst vollständigen Abscheidung der Partikel aus dem Abgasstrom ist bei der Entwicklung der Dieselpartikelfilter darauf zu achten, dass der Abgasgegendruck, auch wenn das Filterelement mit Rußpartikeln beladen ist, möglichst gering ist. Eine Erhöhung des Abgasgegendrucks führt nämlich zu einer Verschlechterung des Wirkungsgrad der Brennkraftmaschine und infolgedessen zu einer Erhöhung des Kraftstoffverbrauchs.

Die EP 0 885 860 offenbart eine katalystische Beschichtung, die beschichtete Keramikfasern aufweist.

Offenbarung der Erfindung

Aufgabe der Erfindung ist es, eine katalytisch aktive Beschichtung zu beschreiben, die für einen Partikelfilter aus einem gegebenen Material mit einer vorgegebenen Porosität und Porenstruktur eine optimale Filtrationseffizienz erzielt: Dabei soll der Abgasgegendruck so gering wie möglich gehalten werden.

Diese Aufgabe wird erfindungsgemäß gelöst durch die Gegenstände der nebengeordneten Ansprüche 1 und 2. Diesen Ansprüchen ist gemeinsam, dass sie Abmessungen der Partikel, die in den katalytisch aktiven Beschichtungen vorhanden sind, angeben. Es hat sich bei praktischen Versuchen herausgestellt, dass bei länglichen, nadelförmigen Partikeln die durchschnittliche Länge größer als das Zweieinhalbfache des maximalen Radius der Partikel sein sollte. Gleichzeitig sollte die durchschnittliche Länge der Partikel nicht größer als das Zweihundertfache des maximalen Radius der Partikel betragen.

Bei blättchenförmigen Partikeln hat es sich als besonders vorteilhaft erwiesen, wenn der maximale Radius der Partikel kleiner als das 0,8-fache der mittleren Länge der Partikel ist. Allen diesen geometrischen Angaben ist gemeinsam, dass sie eine sehr hohe Filtrationseffizienz gewährleisten, ohne den Abgasgegendruck zu stark ansteigen zu lassen. Die beanspruchten Abmessungen der Partikel der Beschichtungen können beispielsweise durch Mahlen einer wässrigen Suspension der Bestandteile der Partikel in einer Kugelmühle auf die gewünschten Werte eingestellt werden.

Als katalytisch aktive Beschichtung werden im Zusammenhang mit der Erfindung Beschichtungen verstanden, die eine katalytische Wirkung gegenüber einem oder mehreren der im Abgas enthaltenen Schadstoffen - dies sind im Wesentlichen CO, Kohlenwasserstoff, $NO_x$, Zwischenprodukte und Russ - haben.

Als geeignete Materialen für die Filterwände des Filterelements haben sich Aluminiumoxid, Magnesiumsilikate, bevorzugt Cordierit, Titandioxid, Siliziumkarbid und/oder Aluminiumtitanat erwiesen. Allerdings ist die Erfindung auch bei Filterelementen auf metallischer Basis mit Erfolg einsetzbar.

Die eingangs genannten Vorteile werden auch mit einer Filtereinrichtung umfassend ein Filterelement und ein Gehäuse, dadurch gelöst, dass ein erfindungsgemäßes Filterelement eingesetzt wird.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen genannten Vorteile können sowohl Einzeln als auch in beliebiger Kombination miteinander erfindungswesentlich sein.

Kurze Beschreibung der Zeichnungen

Es zeigen:

Figur 1    eine schematische Darstellung einer Brennkraftmaschine mit einer erfindungsgemäßen Abgasnachbehandlungseinrichtung,

Figur 2    ein Ausführungsbeispiel eines erfindungsgemäßen Filterelements im Längsschnitt und

Figur 3    ein Partikel einer katalytischen Beschichtung.

Ausführungsformen der Erfindung

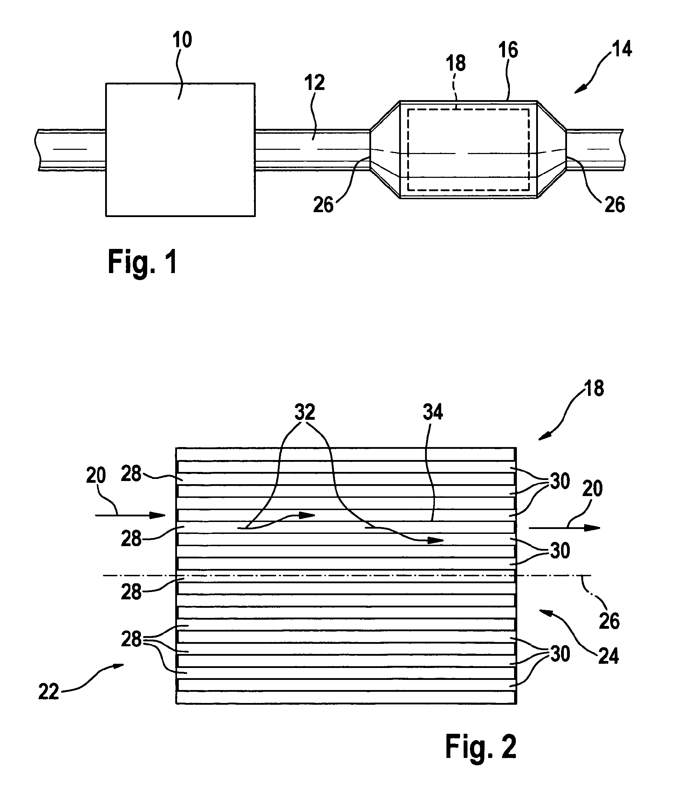

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert, um gesetzliche Bestimmungen einzuhalten.

Bei dem in Figur 1 dargestellten Ausführungsbeispiel umfasst die Filtereinrichtung 14 ein zylindrisches Gehäuse 16, in dem ein im vorliegenden Ausführungsbeispiel rotationssymmetrisches, insgesamt ebenfalls zylindrisches Filterelement 18 angeordnet ist. Selbstverständlich ist die Erfindung nicht auf diese Geometrien beschränkt.

In Figur 2 ist ein Querschnitt durch ein Filterelement 18 nach dem Stand der Technik dargestellt. Das Filterelement 18 ist als extrudierter Formkörper aus einem keramischen Material, wie zum Beispiel Cordierit, hergestellt. Das Filterelement 18 wird in Richtung der Pfeile 20 von nicht dargestelltem Abgas durchströmt. Eine erste Stirnfläche hat in Figur 2 das Bezugszeichen 22, während eine zweite Stirnfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der zweiten Stirnfläche 24 verschlossen. Die Verschlussstopfen sind in Figur 2 ohne Bezugszeichen dargestellt. Im Gegensatz dazu sind die Austrittskanäle 30 an der zweiten Stirnfläche 24 offen und im Bereich der ersten Stirnfläche 22 verschlossen.

Der Strömungsweg des ungereinigten Abgases führt also in einen der Eintrittskanäle 28 und von dort durch eine Filterwand 34 in einen der Austrittskanäle 30. Exemplarisch ist dies durch die Pfeile 32 dargestellt.

Selbstverständlich können erfindungsgemäße Filterelemente 18 auch in Brennkraftmaschinen von Nutzfahrzeugen oder anderen mobilen oder stationären Anwendungen eingesetzt werden.

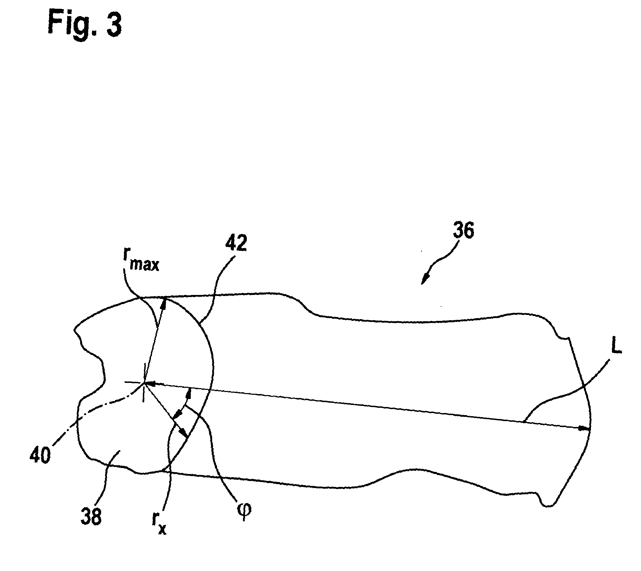

In Figur 3 ist beispielhaft ein einzelner Partikel 36 dargestellt. Dieser Partikel 36 weist eine Querschnittsfläche 38 und eine Länge L auf. Ausgehend von einem Mittelpunkt 40 der Querschnittsfläche 38 kann zu jedem Punkt zum Rand der Querschnittsfläche 38 ein Radius $R_{x(\varphi)}$ eingezeichnet werden. Wenn der Radius $R_x$ einen Winkelbereich zwischen 0° und 360° überstreicht, ändert sich die Länge des Radius in Abhängigkeit des Winkels $\varphi$. Der Radius bei dem der Abstand zwischen dem Mittelpunkt 40 der Querschnittsfläche 38 und dem Rand 42 der . Querschnittsfläche 38 ein Maximum annimmt, wird als maximaler Radius $K_{max}$ bezeichnet. Der Mittelpunkt 40 der Querschnittsfläche 38 kann beispielsweise der Flächenschwerpunkt der Querschnittsfläche 38 sein.

Wenn das Partikel 36 über die Länge L unterschiedliche Querschnittsflächen aufweist, wird für die Dimensionierung stets von der maximalen Querschnittsfläche ausgegangen. Diese maximale Querschnittsfläche muss nicht an einem der Enden des Partikels 36 liegen, sondern kann auch dazwischen angeordnet sein.

**Patentansprüche**

1. Filterelement, insbesondere zur Filterung von Abgasen einer Brennkraftmaschine, mit einer parallel zur Hauptströmungsrichtung des Abgases verlaufenden Längsachse (26), mit einer Vielzahl von Eintrittskanälen (28), und mit einer Vielzahl von Austrittskanälen (30), wobei die Eintrittskanäle (28) und/oder die Austrittskanäle (30) durch Filterwände (34) begrenzt werden, und wobei die Filterwände (34) mit einer katalytisch aktiven Beschichtung versehen sind, **dadurch gekennzeichnet, dass** einer oder mehrer Bestandteile der katalytisch aktiven Beschichtung aus dreidimensional strukturierten länglichen Partikeln und/oder aus Mischungen derselben bestehen, und dass die Abmessungen dieser Partikel folgender Ungleichung genügen:

$$200 \cdot l_{D50, \, Partikel} > r_{max} > 2{,}5 \cdot l_{D50, \, Partikel}$$

Mit:

$l_{D50, Partikel}$:     Median ($l_{50}$) der Länge der Partikel
$r_{max}$:     Maximaler Radius im Querschnitt des Partikels

**2.** Filterelement, insbesondere zur Filterung von Abgasen einer Brennkraftmaschine, mit einer parallel zur Hauptströmungsrichtung des Abgases verlaufenden Längsachse (26), mit einer Vielzahl von Eintrittskanälen (28), und mit einer Vielzahl von Austrittskanälen (30), wobei die Eintrittskanäle (28) und/oder die Austrittskanäle (30) durch Filterwände (34) begrenzt werden, und wobei die Filterwände (34) mit einer katalytisch aktiven Beschichtung versehen sind, **dadurch gekennzeichnet, dass** einer oder mehrer Bestandteile der katalytisch aktiven Beschichtung aus dreidimensional strukturierten plättchenförmigen Partikeln und/oder aus Mischungen derselben bestehen, und dass die Abmessungen dieser Partikel folgender Ungleichung genügen:

$$r_{max} < 0{,}8 \cdot l_{D50, Partikel}$$

Mit:

$l_{D50, Partikel}$:     Median ($l_{50}$) der Länge der Partikel
$r_{max}$:     Maximaler Radius im Querschnitt des Partikels

**3.** Filterelement nach Anspruch 1 oder 2, **dadurch gekennzeichnet, dass** der maximale Radius ($r_{max}$)ausgehend von einem Flächenschwerpunkt (40) einer Querschnittsfläche (38) ermittelt wird.

**4.** Filterelement nach einem der vorhergehenden Ansprüche, **dadurch gekennzeichnet, dass** die katalytische Beschichtung Partikel gemäß Anspruch 1 und/oder Anspruch 2 umfasst.

**5.** Filterelement nach einem der vorhergehenden Ansprüche, **dadurch gekennzeichnet, dass** die Partikel der katalytischen Beschichtung gemäß einem der vorhergehenden Ansprüche gekrümmt, konvex, konkav und/oder gewellt verformt sind, und dass sich die Ungleichungen gemäß der Ansprüche 1 oder 2 auf den Radius ($r_x (\varphi)$, $r_{max}$) im größten Querschnitt der verformten Partikel beziehen.

**6.** Filterelement nach einem der vorhergehenden Ansprüche, **dadurch gekennzeichnet, dass** die Partikel der katalytischen Beschichtung agglomerierte und/oder verästelte Strukuren umfassen.

**7.** Filterelement nach einem der vorhergehenden Ansprüche, **dadurch gekennzeichnet, dass** mindestens ein Bestandteil der katalytisch aktiven Beschichtung aus dreidimensional strukturierten Partikeln besteht, und dass die Abmessungen dieser Partikel für überwiegend mikroporöse Partikel mit einem Median ($D_{50}$) des Durchmessers der Poren < 4 nm folgender Ungleichung genügen:

$$0{,}1 \cdot 10^3 \cdot D_{D50, Poren} < l_{D50, Partikel} < 12 \cdot 10^3 \cdot D_{D50, Poren}$$

Mit:

$D_{D50, Partikel}$:     Median ($D_{50}$) des Durchmessers der Partikel
$l_{D50. Partikel}$:     Median ($l_{50}$) der Länge der Partikel

**8.** Filterelement nach einem der vorhergehenden Ansprüche, **dadurch gekennzeichnet, dass** mindestens ein Bestandteil der katalytisch aktiven Beschichtung aus dreidimensional strukturierten Partikeln besteht, und dass die Abmessungen dieser Partikel für überwiegend mesoporöse Partikel mit einem Median ($D_{50}$) des Durchmessers der

Poren > 4 nm und < 100 nm folgender Ungleichung genügen:

$$0,1 \cdot 10^3 \cdot D_{D50, \text{Poren}} < l_{D50, \text{Partikel}} < 12 \cdot 10^3 \cdot D_{D50, \text{Poren}}$$

Mit:

$D_{D50, \text{Partikel}}$:     Median ($D_{50}$) des Durchmessers der Partikel

$l_{D50, \text{Partikel}}$:     Median ($l_{50}$) der Länge der Partikel

9. Filterelement nach einem der vorhergehenden Ansprüche, **dadurch gekennzeichnet, dass** für eine Masse ($m_{\text{Beschichtung}}$) der katalytischen Beschichtung bezogen auf ein beschichtetes Volumen ($V_{\text{beschichtet}}$) des Filterelements (18) gilt:

$$m_{\text{Beschichtung}} = \varepsilon_{\text{Filter}} \cdot V_{\text{beschichtet}} \cdot \rho_{p, \text{Beschichtung}} / \chi_{\text{Beschichtung}}$$

Mit:

$\varepsilon_{\text{Filter}}$:     Porosität des Filterelements [%]

$\rho_{p, \text{Beschichtung}}$:     scheinbare Dichte der Beschichtung

$\chi_{\text{Beschichtung}}$:     empirischer Beschichtungsfaktor

10. Filterelement nach Anspruch 9, **dadurch gekennzeichnet, dass** die scheinbare Dichte der Beschichtung ($\rho_{p, \text{Bechichtung}}$)aus der wahren Dichte ($\rho_{w, \text{Beschichtung}}$)und der Porosität ($\varepsilon_{\text{Beschichtung}}$)der Beschichtung ermittelt wird.

11. Filterelement nach Anspruch 9 oder 10, **dadurch gekennzeichnet, dass** der empirische Beschichtungsfaktor ($\chi_{\text{Beschichtung}}$) zwischen acht (8) und zweihundert (200) liegt.

12. Filterelement nach einem der Ansprüche 9 bis 11, **dadurch gekennzeichnet, dass** die Masse ($m_{\text{Beschichtung}}$), die wahre Dichte ($\rho_{w, \text{Beschichtung}}$) und die Porosität ($\varepsilon_{\text{Beschichtung}}$) der Beschichtung auf die bei einer Temperatur von 1100° C vorliegende Form bezogen ist.

13. Filterelement nach einem der vorhergehenden Ansprüche, **dadurch gekennzeichnet, dass** die katalytische Beschichtung einen oder mehrere metalloxidische Stoffe aus der Gruppe Aluminiumoxide ($Al_2O_3$), Aluminium-Silikat (x $Al_2O_3$.y$SiO_2$), Silizium-Dioxid ($SiO_2$), ZirkonDioxid ($ZrO_2$), Titan-Dioxid ($TiO_2$) und den Oxiden der Lanthanoide oder Mischoxide der genannten Elemente umfasst.

14. Filterelement nach einem der vorhergehenden Ansprüche, **dadurch gekennzeichnet, dass** die katalytisch aktive Beschichtung Alkali- Metalloxide, Erdalkali- Metalloxide und/oder, keramische oder mineralische Stoffe, insbesondere Silizium-Carbid (SiC), Cordierit, Boehmit und Zeolithe umfasst.

15. Filterelement nach einem der vorhergehenden Ansprüche, **dadurch gekennzeichnet, dass** die katalytisch aktive Beschichtung eines oder mehrere Edelmetalle aus der Gruppe der Platinmetalle umfasst.

16. Filterelement nach einem der vorhergehenden Ansprüche, **dadurch gekennzeichnet, dass** die Filterwände (34) aus Aluminium-Magnesium-Silikat, Cordierit, Titandioxid ($TiO_2$), Siliziumcarbid (SiC) und/oder Aluminiumtitanat bestehen.

17. Filterelement nach einem der Ansprüche 1 bis 15, **dadurch gekennzeichnet, dass** die Filterwände (34) aus Metall, Sintermetall, Metallfaser oder Metallschaum, bestehen.

**18.** Filtereinrichtung mit einem Filterelement (18) und mit einem Gehäuse (16), **dadurch gekennzeichnet, dass** das Filterelement ein Filterelement (18) nach einem der vorhergehenden Ansprüche ist.

**Claims**

**1.** Filter element, in particular for filtering exhaust gases of an internal combustion engine, having a longitudinal axis (26) running parallel to the main flow direction of the exhaust gas, having a multiplicity of inlet ducts (28) and having a multiplicity of outlet ducts (30), the inlet ducts (28) and/or the outlet ducts (30) being delimited by filter walls (34), and the filter walls (34) being provided with a catalytically active coating, **characterized in that** one or more constituents of the catalytically active coating are composed of three-dimensionally structured elongate particles and/or of mixtures thereof, and **in that** the dimensions of said particles satisfy the following inequation:

$$200 \bullet l_{D50,particles} > r_{max} > 2.5 \bullet l_{D50,particles}$$

where

$l_{D50,particles}$: median ($l_{50}$) of the length of the particles
$r_{max}$: maximum radius in the cross section of the particle

**2.** Filter element, in particular for filtering exhaust gases of an internal combustion engine, having a longitudinal axis (26) running parallel to the main flow direction of the exhaust gas, having a multiplicity of inlet ducts (28) and having a multiplicity of outlet ducts (30), the inlet ducts (28) and/or the outlet ducts (30) being delimited by filter walls (34), and the filter walls (34) being provided with a catalytically active coating, **characterized in that** one or more constituents of the catalytically active coating are composed of three-dimensionally structured plate-shaped particles and/or of mixtures thereof, and **in that** the dimensions of said particles satisfy the following inequation:

$$r_{max} < 0.8 \bullet l_{D50,particles}$$

where:

$l_{D50,particles}$: median ($l_{50}$) of the length of the particles
$r_{max}$: maximum radius in the cross section of the particle

**3.** Filter element according to Claim 1 or 2, **characterized in that** the maximum radius ($r_{max}$) is determined proceeding from a centre of area (40) of a cross-sectional area (38).

**4.** Filter element according to one of the preceding claims, **characterized in that** the catalytic coating comprises particles according to Claim 1 and/or Claim 2.

**5.** Filter element according to one of the preceding claims, **characterized in that** the particles of the catalytic coating according to one of the preceding claims are deformed in a curved, convex, concave and/or corrugated manner, and **in that** the inequations according to Claims 1 or 2 relate to the radius ($r_x (\varphi)$, $r_{max}$) in the largest cross section of the deformed particles.

**6.** Filter element according to one of the preceding claims, **characterized in that** the particles of the catalytic coating comprise agglomerated and/or branched structures.

**7.** Filter element according to one of the preceding claims, **characterized in that** at least one constituent of the catalytically active coating is composed of three-dimensionally structured particles, and **in that** the dimensions of said particles, for predominantly microporous particles with a median ($D_{50}$) of the diameter of the pores < 4 nm, satisfy the following inequation:

$$0.1 \bullet 10^3 \bullet D_{D50,pores} < l_{D50,particles} < 12 \bullet 10^3 \bullet D_{D50,pores}$$

where:

$D_{D50,particles}$: median ($D_{50}$) of the diameter of the particles
$l_{D50,particles}$: median ($l_{50}$) of the length of the particles

8. Filter element according to one of the preceding claims, **characterized in that** at least one constituent of the catalytically active coating is composed of three-dimensionally structured particles, and **in that** the dimensions of said particles, for predominantly mesoporous particles with a median ($D_{50}$) of the diameter of the pores > 4 nm and < 100 nm, satisfy the following inequation:

$$0.1 \bullet 10^3 \bullet D_{D50,pores} < l_{D50,particles} < 12 \bullet 10^3 \bullet D_{D50,pores}$$

where:

$D_{D50,particles}$: median ($D_{50}$) of the diameter of the particles
$l_{D50,particles}$: median ($l_{50}$) of the length of the particles

9. Filter element according to one of the preceding claims, **characterized in that**, for a mass ($m_{coating}$) of the catalytic coating in relation to a coated volume ($V_{coated}$) of the filter element (18), the following applies:

$$m_{coating} = \varepsilon_{filter} \bullet V_{coated} \bullet \rho_{a,coating} / X_{coating}$$

where:

$\varepsilon_{filter}$: porosity of the filter element [%]
$\rho_{a,coating}$: apparent density of the coating
$X_{coating}$: empirical coating factor

10. Filter element according to Claim 9, **characterized in that** the apparent density of the coating ($\rho_{a,coating}$) is determined from the true density ($\rho_{t,coating}$) and the porosity ($\varepsilon_{coating}$) of the coating.

11. Filter element according to Claim 9 or 10, **characterized in that** the empirical coating factor ($X_{coating}$) lies between eight (8) and two hundred (200).

12. Filter element according to one of Claims 9 to 11, **characterized in that** the mass ($m_{coating}$), the true density ($\rho_{t,coating}$) and the porosity ($\varepsilon_{coating}$) of the coating refer to the form present at a temperature of 1100°C.

13. Filter element according to one of the preceding claims, **characterized in that** the catalytic coating comprises one or more metal oxidic substances from the group of aluminium oxides ($Al_2O_3$), aluminium silicate ($x\ Al_2O_3.y\ SiO_2$), silicon dioxide ($SiO_2$), zirconium dioxide ($ZrO_2$), titanium dioxide ($TiO_2$) and the oxides of the lanthanides or mixed oxides of the stated elements.

14. Filter element according to one of the preceding claims, **characterized in that** the catalytically active coating comprises alkali metal oxides, earth alkali metal oxides and/or ceramic or mineral substances, in particular silicon carbide (SiC), cordierite, boehmite and zeolites.

15. Filter element according to one of the preceding claims, **characterized in that** the catalytically active coating comprises one or more noble metals from the group of platinum metals.

16. Filter element according to one of the preceding claims, **characterized in that** the filter walls (34) are composed of aluminium magnesium silicate, cordierite, titanium dioxide ($TiO_2$), silicon carbide (SiC) and/or aluminium titanate.

17. Filter element according to one of Claims 1 to 15, **characterized in that** the filter walls (34) are composed of metal, sintered metal, metal fibres or metal foam.

18. Filter device having a filter element (18) and having a housing (16), **characterized in that** the filter element is a filter element (18) according to one of the preceding claims.

**Revendications**

1. Elément de filtre, en particulier pour filtrer les gaz d'échappement d'un moteur à combustion interne, l'élément de filtre présentant
un axe longitudinal (26) qui s'étend parallèlement à la direction d'écoulement principal des gaz d'échappement,
plusieurs canaux d'entrée (28) et plusieurs canaux de sortie (30),
les canaux d'entrée (28) et/ou les canaux de sortie (30) étant délimités par des parois (34) du filtre,
les parois (34) du filtre étant dotées d'un revêtement catalytiquement actif,
**caractérisé en ce**
**qu'**un ou plusieurs composants du revêtement catalytiquement actif sont constitués de particules allongées à structuration tridimensionnelle et/ou de mélanges de ces particules et
en ce que les dimensions de ces particules satisfont l'inéquation ci-dessous :

$$200.I_{D50,\ Partikel} > r_{max} > 2,5.I_{D50,\ Partikel}$$

dans laquelle

$I_{D50,\ Partikel}$ : médiane ($I_{50}$) de la longueur des particules
$r_{max}$ : rayon maximum de la section transversale des particules.

2. Elément de filtre, en particulier pour filtrer les gaz d'échappement d'un moteur à combustion interne, l'élément de filtre présentant
un axe longitudinal (26) qui s'étend parallèlement à la direction d'écoulement principal des gaz d'échappement,
plusieurs canaux d'entrée (28) et plusieurs canaux de sortie (30),
les canaux d'entrée (28) et/ou les canaux de sortie (30) étant délimités par des parois (34) du filtre,
les parois (34) du filtre étant dotées d'un revêtement catalytiquement actif,
**caractérisé en ce**
**qu'**un ou plusieurs composants du revêtement catalytiquement actif sont constitués de particules allongées à structuration tridimensionnelle et/ou de mélanges de ces particules et
en ce que les dimensions de ces particules satisfont l'inéquation ci-dessous :

$$r_{max} < 0,8.I_{D50,\ Partikel}$$

dans laquelle

$l_{D50, Partikel}$ : médiane ($l_{50}$) de la longueur des particules

$r_{max}$ : rayon maximum de la section transversale des particules.

3. Elément de filtre selon la revendication 1 ou 2, **caractérisé en ce que** le rayon maximum ($r_{max}$) est déterminé en partant d'un centre de gravité (40) de la surface (38) d'une section transversale.

4. Elément de filtre selon l'une des revendications précédentes, **caractérisé en ce que** le revêtement catalytique comporte des particules selon la revendication 1 et/ou la revendication 2.

5. Elément de filtre selon l'une des revendications précédentes, **caractérisé en ce que** les particules du revêtement catalytique selon l'une des revendications précédentes sont courbées, convexes, concaves et/ou ondulées et **en ce que** les inéquations de la revendication 1 ou 2 concernent le rayon ($r_x(\varphi)$, $r_{max}$) de la plus grande section transversale des particules déformées.

6. Elément de filtre selon l'une des revendications précédentes, **caractérisé en ce que** les particules du revêtement catalytique comportent des structures agglomérées et/ou ramifiées.

7. Elément de filtre selon l'une des revendications précédentes, **caractérisé en ce qu'**au moins un composant du revêtement catalytiquement actif est constitué de particules à structure tridimensionnelle et **en ce que** les dimensions de ces particules, pour des particules principalement microporeuses dont la médiane ($D_{50}$) du diamètre des pores est < 4 nm satisfont l'inéquation ci-dessous :

$$0,1.10^3 . D_{D50,\ Poren} < l_{D50,\ Partikel} < 12.10^3 . D_{D50,\ Poren}$$

dans laquelle

$D_{D50, Partikel}$ médiane ($D_{50}$) du diamètre des particules

$l_{D50, Partikel}$ : médiane ($l_{50}$) de la longueur des particules.

8. Elément de filtre selon l'une des revendications précédentes, **caractérisé en ce qu'**au moins un composant du revêtement catalytiquement actif est constitué de particules à structure tridimensionnelle et **en ce que** les dimensions de ces particules, pour des particules principalement microporeuses dont la médiane ($D_{50}$) du diamètre des pores est > 4 nm et < 100 nm satisfont l'inéquation ci-dessous :

$$0,1.10^3 .\ D_{D50,\ Poren} < l_{D50,\ Partikel} < 12.10^3 .\ D_{D50,\ Poren}$$

dans laquelle

$D_{D50, Partikel}$: - médiane ($D_{50}$) du diamètre des particules

$l_{D50, Partikel}$: médiane ($l_{50}$) de la longueur des particules.

9. Elément de filtre selon l'une des revendications précédentes, **caractérisé en ce que** pour une masse ($m_{Beschichtung}$) du revêtement catalytique par rapport à un volume revêtu ($V_{beschichtet}$) de l'élément de filtre (18), l'équation :

$$m_{Beschichtung} = \varepsilon_{Filter} \cdot V_{beschichtet} \cdot \rho_{p.Beschichtung} / \chi_{Beschichtung}$$

dans laquelle :

$\varepsilon_{Filter}$ : porosité de l'élément de filtre [%]

$\rho_{\text{p.Beschichtung}}$ : masse spécifique apparente du revêtement et

$\chi_{\text{Beschichtung}}$ : facteur empirique de revêtement

est satisfaite.

10. Elément de filtre selon la revendication 9, **caractérisé en ce que** la masse spécifique apparente du revêtement ($\rho_{\text{p.Beschichtung}}$) est déterminée à partir de la masse spécifique réelle ($\rho_{\text{p.Beschichtung}}$) et de la porosité ($\varepsilon_{\text{Beschichtung}}$) du revêtement.

11. Elément de filtre selon les revendications 9 ou 10, **caractérisé en ce que** le facteur empirique de revêtement ($\chi_{\text{Beschichtung}}$) est compris entre huit (8) et deux cents (200).

12. Elément de filtre selon l'une des revendications 9 à 11, **caractérisé en ce que** la masse ($m_{\text{Beschichtung}}$), la masse spécifique réelle ($\rho_{\text{w.Beschichtung}}$) et la porosité ($\varepsilon_{\text{Beschichtung}}$) du revêtement sont rapportées à la forme qui prévaut à une température de 1100°C.

13. Elément de filtre selon l'une des revendications précédentes, **caractérisé en ce que** le revêtement catalytique comporte une ou plusieurs substances d'oxyde métallique de l'ensemble constitué des oxydes d'aluminium ($Al_2O_3$), des silicates d'aluminium ($\chi Al_2O_3 . y SiO_2$), du dioxyde de silicium ($SiO_2$), du dioxyde de zirconium ($ZrO_2$), du dioxyde de titane ($TiO_2$), des oxydes des lanthanoïdes et des oxydes mixtes desdits éléments.

14. Elément de filtre selon l'une des revendications précédentes, **caractérisé en ce que** le revêtement catalytiquement actif comporte des oxydes de métaux alcalins, des oxydes de métaux alcalino-terreux et/ou des substances céramiques ou minérales, en particulier le carbure de silicium ($SiC$), la cordérite, la boehmite et les zéolithes.

15. Elément de filtre selon l'une des revendications précédentes, **caractérisé en ce que** le revêtement catalytiquement actif comporte un ou plusieurs métaux précieux du groupe des métaux du platine.

16. Elément de filtre selon l'une des revendications précédentes, **caractérisé en ce que** les parois (34) du filtre sont constituées de silicate d'aluminium et de magnésium, de cordiérite, de dioxyde de titane ($TiO_2$), de carbure de silicium ($SiC$) et/ou de titanate d'aluminium.

17. Elément de filtre selon l'une des revendications 1 à 15, **caractérisé en ce que** les parois (34) du filtre sont constituées de métal, de métal fritté, de fibre métallique ou de mousse métallique.

18. Système de filtre doté d'un élément de filtre (18) et d'un boîtier (16), **caractérisé en ce que** l'élément de filtre est un élément de filtre (18) selon l'une des revendications précédentes.

**Fig. 1**

**Fig. 2**

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0885860 A